# EUROPEAN PATENT APPLICATION

(11) **EP 4 645 574 A1**
(43) Date of publication of application: **05.11.2025**
(21) Application number: 23912274.0
(22) Date of filing: 27.12.2023
(51) Int. Cl.: H01M 50/507, H01G 11/10, H01G 11/78, H01M 50/213, H01M 50/291, H01M 50/503, H01M 50/509, H01M 50/55, H01M 50/583

(54) **POWER STORAGE MODULE**

(30) Priority: 27.12.2022 JP 2022210913; 27.12.2022 JP 2022210920
(71) Applicant: Panasonic Intellectual Property Management Co., Ltd., Kadoma-shi, Osaka 571-0057 (JP)
(72) Inventor: MURATSU, Jiro, Kadoma-shi, Osaka 571-0057 (JP); OGINO, Hirotaka, Kadoma-shi, Osaka 571-0057 (JP); GOTOU, Toshiya, Kadoma-shi, Osaka 571-0057 (JP); HIRANO, Tatsuya, Kadoma-shi, Osaka 571-0057 (JP); NAGATA, Keisuke, Kadoma-shi, Osaka 571-0057 (JP)
(74) Representative: Eisenführ Speiser
(86) International application number: PCT/JP2023/047040
(87) International publication number: WO 2024/143496

(57) **Abstract**

The present invention includes: a plurality of power storage devices (10); a holder (28) that covers one end of each of the plurality of power storage devices (10) and that has an opening (20) formed in a first surface thereof, for exposing a terminal of the power storage device; a current collector plate (16) that is disposed on the side of the first surface of the holder (28), and one end of which is connected to the terminal via the opening (20); and a bus bar (22) that is connected to the other end of the current collector plate (28). The bus bar (22) has, in an area facing the holder (28), a notch formed by removing a part of the bus bar or a notch portion formed of a through-hole.

## Description

### TECHNICAL FIELD

The present disclosure relates to a power storage module.

### BACKGROUND ART

Conventionally, as an example of a power storage module, a battery module that accommodates a plurality of batteries is used to achieve a desired capacity and voltage, for a secondary battery, such as a lithium-ion battery.

The battery module is configured by connecting, in series, a plurality of battery arrays, which are typically connected in parallel. Accordingly, positive electrodes and negative electrodes of one array of batteries on a positive electrode terminal side are connected to a positive electrode terminal and a negative electrode terminal of the battery module, via a positive electrode current collector plate and a negative electrode current collector plate, and a positive electrode busbar and a negative electrode busbar.

Patent Literature 1 shows an example of a battery module, and depicts a structure where a current collector plate is provided with a cutout portion in which two insulating bodies sandwiching the current collector plate are coupled with rivets.

### CITATION LIST

### PATENT LITERATURE

PATENT LITERATURE 1: WO2014/050678

### SUMMARY

Incidentally, a power storage module is required to achieve further improvement in performance.

A battery module according to the present disclosure includes: a plurality of power storage devices; a holder that covers one end side of the plurality of power storage devices, and has openings which are formed in a first surface of the holder and through which terminals of the respective power storage devices are exposed; a current collector plate that is disposed on the first surface side of the holder, and has one end connected to the terminals via the openings; and a busbar connected to another end of the current collector plate, wherein the busbar has a cutout portion in an area facing the holder, the cutout portion comprising a cutout formed by removing part of the busbar, or a through-hole.

According to the power storage module of the present disclosure, further improvement in performance may be achieved.

### BRIEF DESCRIPTION OF DRAWING

FIG. 1 is a perspective view showing a structure of a power storage module of a first embodiment.
FIG. 2 is an exploded perspective view showing a state where current collector plates are removed in FIG. 1.
FIG. 3 is a perspective view showing a configuration of a negative electrode busbar of the power storage module according to the embodiment of the first embodiment.
FIG. 4 is a plan view of a portion indicated by A in FIG. 1.
FIG. 5 is a plan view showing the portion indicated by A in FIG. 1 in a state where the current collector plates are removed.
FIG. 6 is a perspective view of a corner portion of the power storage module.
FIG. 7 is a perspective view of the battery module of a second embodiment in a state where current collector plates are visible.
FIG. 8 is an exploded perspective view of the battery module of the second embodiment in a state where the current collector plates of the battery module are shown in a separated manner.
FIG. 9 is an enlarged view of part of FIG. 7.
FIG. 10 is an enlarged view of part of FIG. 8.
FIG. 11 is a perspective view showing a configuration of a negative electrode busbar.
FIG. 12 is a plan view of a portion of an opening of the negative electrode current collector plate in FIGS. 7 to 10.
FIG. 13 is a plan view showing a state where the intermediate current collector plate and the negative electrode current collector plate are removed in FIG. 12.
FIG. 14 shows a configuration of the opening which is provided for each of the positive electrode current collector plate and the intermediate current collector plates from which the positive electrode of the battery is exposed.

### DESCRIPTION OF EMBODIMENTS

Hereinafter, referring to the drawings, embodiments of the present disclosure are described below. Note that the following embodiments do not limit the present disclosure, and configurations made by selectively combining a plurality of examples are also encompassed by the present disclosure.

### [First Embodiment (Overall Configuration)]

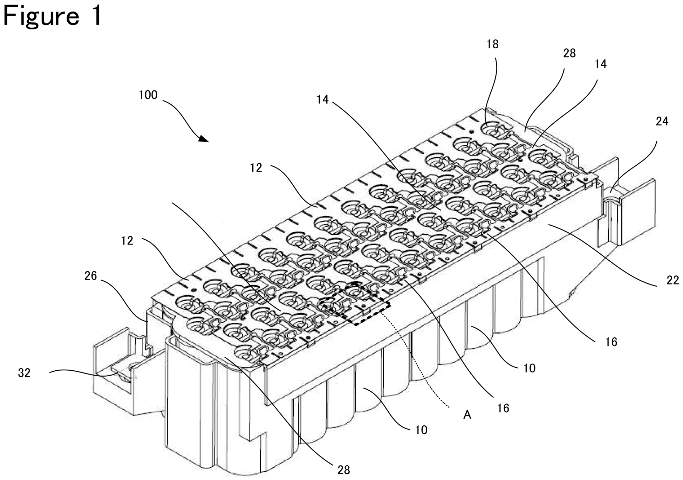

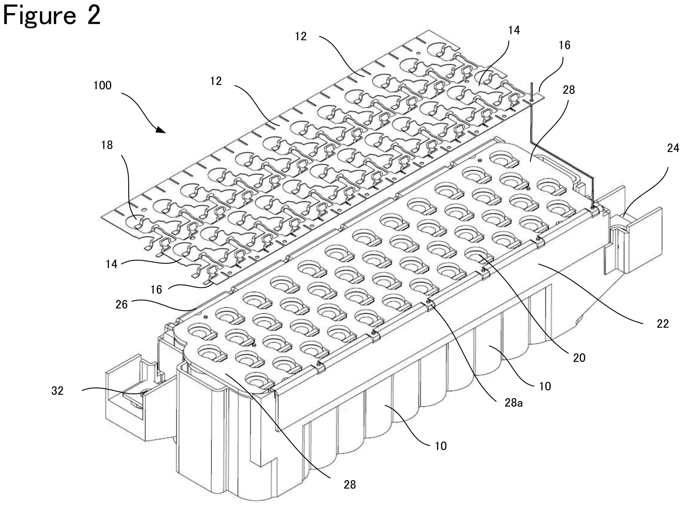

FIG. 1 is a perspective view showing the configuration of a battery module 100 that is an example of a power storage module of a first embodiment, and is a view of a state where current collector plates are visible. FIG. 2 is an exploded perspective view showing a state where a positive electrode current collector plate 12, an intermediate current collector plate 14, and a negative electrode current collector plate 16 are removed.

In the battery module 100, a plurality of batteries 10 as examples of power storage devices are arranged in an aligned manner. In this example, there are four arrays which each include 12 aligned batteries, and total 48 batteries 10 constitute one battery module 100.

The positive electrode current collector plate 12 is connected in parallel to the positive electrode terminals of 24 batteries 10 on the first array and second array. The intermediate current collector plate 14 is connected in parallel to the negative electrode terminals of 24 batteries 10 on the first array and second array and the positive electrode terminals of 24 batteries 10 on the third array and fourth array. The negative electrode current collector plate 16 is connected in parallel to the negative electrode terminals of 24 batteries 10 on the third array and fourth array. By this connection, the positive electrode current collector plate 12, the intermediate current collector plates 14, and the negative electrode current collector plate 16 are connected to each other in series via the batteries 10. The positive electrode current collector plate 12 and the negative electrode current collector plate 16 are disposed, in the series connection direction, on the opposite ends. That is, the positive electrode current collector plate 12 and the negative electrode current collector plate 16 are respectively positioned on one end and the other end in the series connection direction of the current collector plates.

Each of the positive electrode current collector plate 12, the intermediate current collector plate 14, and the negative electrode current collector plate 16 (hereinafter, also described as "plurality of current collector plates" about an issue that is not limited to a specific current collector plate) is a plate-shaped conductive member arranged to cover the array of the batteries 10. In this example, the battery 10 includes the positive electrode and the negative electrode at an upper end portion, and the positive electrode current collector plate 12, the intermediate current collector plate 14, and the negative electrode current collector plate 16 have cutouts 18 that each correspond to two terminals of the one battery 10 at its upper end. The plurality of current collector plates each include a base portion, and a plurality of lead portions that extend from the base portion. The lead portions are each connected to the positive electrode terminal or the negative electrode terminal through a corresponding opening 20. The base portion connects, in parallel, lead portions connected to the terminals with the same polarity, and connects, in series, lead portions connected to terminals with different polarities. The base portion of the positive electrode current collector plate 12, or the negative electrode current collector plate 16 may be provided with a slit-shaped cutout that extends in a direction intersecting with the direction in which the lead portions are arranged.

Parts of the positive electrode current collector plate 12, the intermediate current collector plate 14, and the negative electrode current collector plate 16 around the cutouts 18 extend, and are connected to the terminals of the batteries 10.

The battery 10 may include, for example: an electrode assembly that includes a positive electrode and a negative electrode facing each other via a separator; a can that houses the electrode assembly along with electrolytic solution; and a sealing plate that blocks an opening of the can along with a gasket.

The sealing plate and the can are made of a conductive material, and is made of, for example, metal.

The can includes: a cylindrical portion; a bottom portion that blocks one end of the cylindrical portion; and an opening portion formed at the other end of the cylindrical portion. A ring-shaped groove portion where its outer-peripheral surface is concave, and its corresponding inner-peripheral surface protrudes is formed in an area between the sealing plate of the cylindrical portion and the electrode assembly. Furthermore, a swaged portion bent to be inclined inward may be formed at an end of the opening portion in the radial direction of the cylindrical portion.

The positive electrode of the electrode assembly may be electrically connected to the sealing plate via a current collector member, such as a lead. The sealing plate may be used as the positive electrode terminal.

The negative electrode of the electrode assembly may be electrically connected to the bottom portion of the can. The swaged portion of the can may be used as the negative electrode terminal.

The gasket is a ring-shaped member made of an insulative elastic body. The gasket intervenes between the sealing plate and the opening portion of the can. The gasket is formed to extend from an area between the upper surface of the sealing plate and the swaged portion to an area between the lower surface of the sealing plate and the groove portion. At least one of the sealing plate or the can may be provided with an exhaust valve that is blown in case the pressure in the can exceeds a predetermined value.

As an example of the power storage device, a battery is used and description is made in the present embodiment. However, the power storage device is not limited to the battery. The power storage device may be a capacitor.

As shown in FIG. 2, a holder 28 made of insulative resin is provided below the positive electrode current collector plate 12, the intermediate current collector plate 14, and the negative electrode current collector plate 16, and above the batteries 10. That is, the positive electrode current collector plate 12, the intermediate current collector plate 14, and the negative electrode current collector plate 16 are fixed onto the upper surface (first surface) of the holder 28. The holder 28 includes openings 20 that each correspond to two terminals at the upper end of one battery 10.

A negative electrode busbar 22 that extends on a side of one array of batteries 10 in the longitudinal direction is connected to the negative electrode current collector plate 16. The negative electrode busbar 22 is connected to a total negative electrode 24 at one end (right side in the diagram) thereof. A positive electrode busbar 26 that is connected to the positive electrode current collector plate 12 is provided on a side of one array of batteries 10 on the opposite side of the negative electrode busbar 22. The positive electrode busbar 26 is connected, at its one end (left side in the diagram), to a total positive electrode 32.

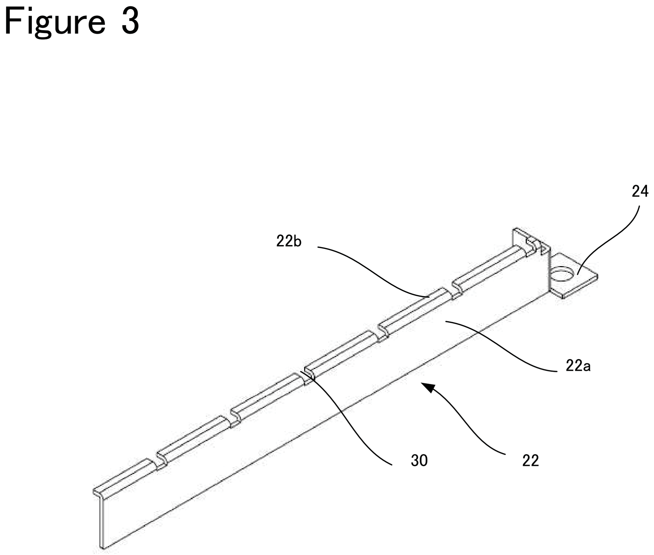

FIG. 3 is a perspective view showing the configuration of the negative electrode busbar 22. As illustrated, the negative electrode busbar 22 includes: a side wall portion 22a positioned on a side portion of one array of batteries 10; and an upper wall portion 22b that is bent inward above the one array of batteries 10 from the upper end of the side wall portion 22a. In other words, the negative electrode busbar 22 includes: the upper wall portion 22b that extends along the upper surface (first surface) of the holder 28; and the side wall portion 22a that is connected to the upper surface, extends in a direction intersecting with the upper surface, and faces the side surface (second surface) of the holder 28. Cutout portions 30 formed by removing parts of the upper wall portion 22b and the side wall portion 22a are provided. In this case, five cutout portions 30 are formed. As shown in FIG. 2, part of the holder 28 extends into each cutout portion 30. The negative electrode current collector plate 16 is joined to the upper wall portion 22b by laser welding or resistance welding. Note that the cutout portions 30 may be formed only in the upper wall portion 22b. The negative electrode busbar 22 may be fixed by, for example, screwing between through-holes (not shown) provided in the side wall portion 22a and the side surface of the holder 28.

### [Configuration of Connection Portion Between Current Collector Plate and Busbar]

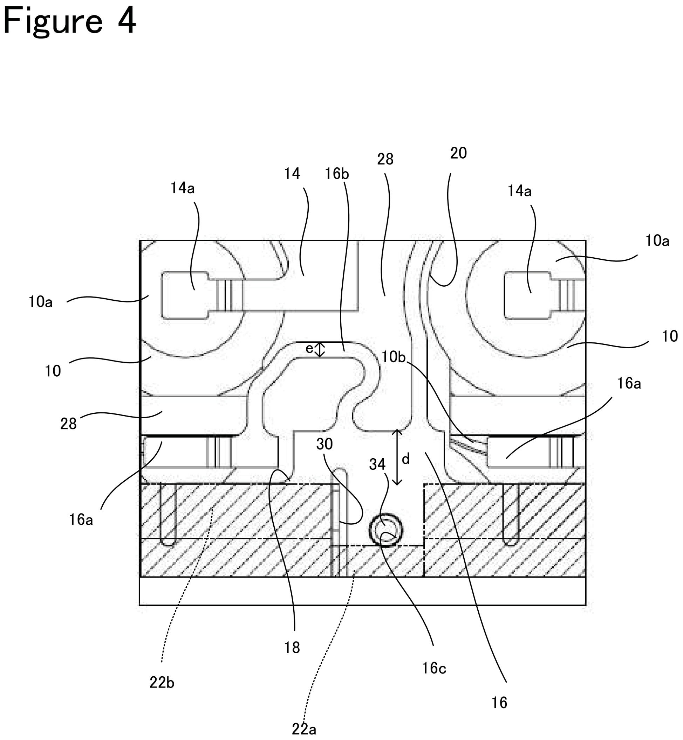

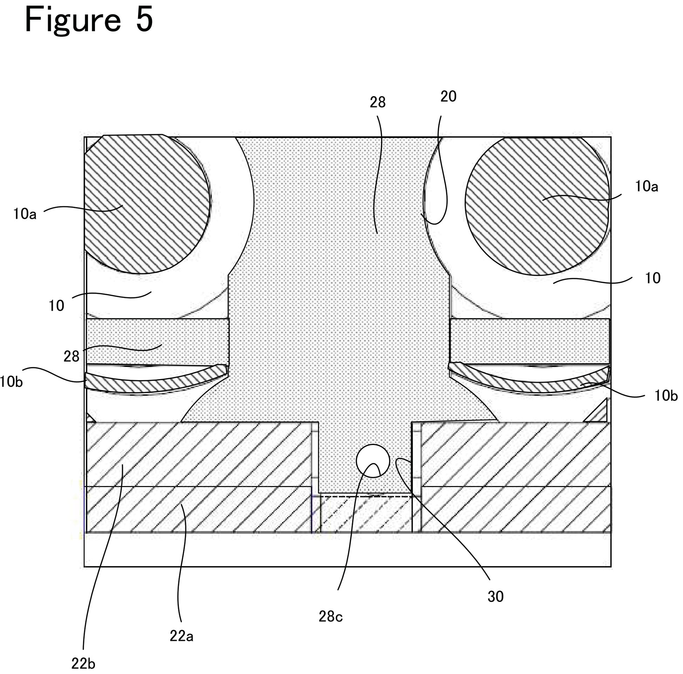

FIG. 4 is a plan view of a portion indicated by "A" in FIG. 1. FIG. 5 is a plan view showing this portion in a state where the intermediate current collector plate 14 and the negative electrode current collector plate 16 are removed.

As illustrated, a lead portion 14a of the intermediate current collector plate 14 is connected to the positive electrode terminal 10a of the battery 10. A lead portion 16a of the negative electrode current collector plate 16 includes fuse 16b, and is connected to a negative electrode terminal 10b of the battery 10 via the fuse 16b. The fuse 16b is blown by overcurrent.

A portion indicated by hatching with broken diagonal lines in FIGS. 4 and 5 is a portion at which the negative electrode busbar 22 is positioned, the side wall portion 22a extends downward, and the upper wall portion 22b extends above the batteries 10. Note that in FIG. 5, the holder 28 is indicated with a sand texture, and the positive electrode terminals 10a and the negative electrode terminals 10b are indicated by hatching with diagonal lines.

The cutout portions 30 are formed in the negative electrode busbar 22. As shown in FIG. 5, an elongated portion 28a that is part of the holder 28 extends is formed in each cutout. The elongated portion 28a is provided with a positioning pin 34. The positioning pin 34 penetrates through a hole 16c (see FIG. 4) provided in the negative electrode current collector plate 16, and a hole 28c provided in the holder 28. Consequently, by inserting the positioning pin 34 into the holes 16c and 28c, the negative electrode current collector plate 16 can be positioned with respect to the holder 28.

Consequently, when the power storage module is manufactured, in a state where the negative electrode current collector plate 16 is positioned on the holder 28 by the positioning pin 34, the lead portion 16a can be fixed to the negative electrode terminal of the battery 10 by welding or the like. When the power storage module is manufactured, the positioning pin 34 is not necessarily processed except insertion into the hole 16c, and the positioning pin 34 itself may be used as means for fixing the negative electrode current collector plate 16 after the power storage module is assembled. When the holder 28 and the negative electrode current collector plate 16 are fixed to each other by the welding, adhesive or the like, the elongated portion 28a and the negative electrode current collector plate 16 may be provided with no positioning pin as a positioning structure, and may be provided only with holes (in particular, through-holes) that overlap each other. In a process of manufacturing the power storage module, a jig may be provided with a positioning pin, and a process of fixing the holder 28 and the negative electrode current collector plate 16 to each other may be performed in a state where the positioning pin is inserted through the holes overlapping each other. After the fixing process is completed, the positioning pin may be removed from the holes overlapping with each other.

In particular, in the present embodiment, the positioning pin is disposed at the elongated portion 28a of the negative electrode busbar 22. Accordingly, the distance d of a root area between a portion of the negative electrode current collector plate 16 where the fuse 16b extends, and an end portion of a portion overlapping the negative electrode busbar 22 can be sufficient so as to be twice or more the line width e of the fuse 16b, and the originating position of the fuse 16b can be a position close to the negative electrode busbar 22. Thus, unlike the power storage module without the cutout portion 30 and the elongated portion 28a, the base portion of the negative electrode current collector plate and the holder 28 are not required to be provided with a positioning structure at the area between the negative electrode busbar and the lead portion, the width of the holder 28 can be relatively small, and the energy density of the battery module can be maintained high. Note that the cutout portion 30 is the cutout that extends from the edge of the negative electrode busbar. However, the cutout portion in the present disclosure is not limited only to the cutout. The cutout portion may be a through-hole.

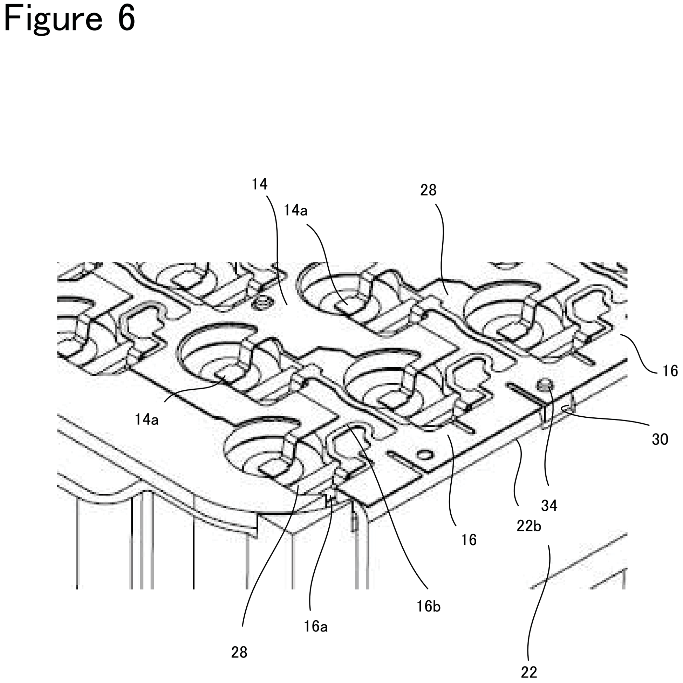

FIG. 6 is a perspective view of a corner portion of the battery module 100. As illustrated, the negative electrode current collector plate 16 extends in the longitudinal direction above the upper wall portion 22b of the negative electrode busbar 22. The negative electrode current collector plate 16 connects the negative electrode busbar 22 to the negative electrodes of batteries 10 on the third array and the fourth array. The intermediate current collector plate 14 connects the negative electrode terminals of batteries 10 on the first array and second array to the positive electrodes of the batteries 10 on the third array and the fourth array.

### [Other]

In the above embodiment, the positioning holes provided in the holder 28 and the negative electrode current collector plate 16, and the positioning pins that are inserted through the holes are used as the positioning structure for the negative electrode current collector plate 16. However, the positioning structure may include projections provided on one member, and holes that are provided in the other member and accommodate the respective projections.

The positive electrode terminal 10a of the battery 10 is provided at the center (sealing plate) on the upper end, and the negative electrode terminal 10b is provided at a peripheral portion (swaged portion). However, the positions may be inverted. In plan view, the positive electrode terminal 10a has a circular shape, and the negative electrode terminal 10b has a circular ring shape. However, another shape may be adopted. Furthermore, the positive electrode terminal 10a and the negative electrode terminal 10b may be provided at the upper end and the lower end of the battery 10, respectively.

The configuration of the connection portion between the negative electrode current collector plate 16 and the negative electrode busbar 22 has thus been described. The described configuration may be a configuration of the positive electrode current collector plate 12 and the positive electrode busbar.

### [Supplementary Note]

The present disclosure is further described with the following configurations.

Configuration 1: A power storage module, including: a plurality of power storage devices; a holder that covers one end side of the plurality of power storage devices, and has openings which are formed in a first surface of the holder and through which terminals of the respective power storage devices are exposed; a current collector plate that is disposed on the first surface side of the holder, and has one end connected to the terminals via the openings; and a busbar connected to another end of the current collector plate, wherein the busbar has a cutout portion formed by removing part of the busbar, in an area facing the holder, the holder includes an elongated portion that extends into the cutout portion, and part of the current collector plate faces a surface of the elongated portion.

Configuration 2: The power storage module according to Configuration 1, wherein the holder includes a second surface that is connected to the first surface, and extends in a direction intersecting with the first surface, the cutout portion of the busbar faces the second surface, and the elongated portion extends from the second surface.

Configuration 3: The power storage module according to Configuration 1 or 2, wherein a positioning structure used to position the elongated portion and the current collector plate is formed on the elongated portion and the current collector plate.

Configuration 4: The power storage module according to Configuration 3, wherein the positioning structure includes positioning holes that are provided at the elongated portion and part of the current collector plate, and overlap each other.

Configuration 5: The power storage module according to Configuration 4, wherein the positioning structure further includes a positioning pin that is inserted into the positioning holes overlapping each other.

Configuration 6: The power storage module according to Configuration 3, wherein the positioning structure consists of the positioning pin and a hole provided respectively for one and another of the elongated portion and the current collector plate.

Configuration 7: The power storage module according to any one of Configurations 1 to 6, wherein the busbar includes: a side wall portion positioned along the second surface; and an upper wall portion that is bent from the side wall portion, and extends along the first surface, and the cutout portion is formed by removing part of the upper wall portion.

Configuration 8: The power storage module according to Configuration 7, wherein the cutout portion is further formed to extend from the upper wall portion to the side wall portion.

Configuration 9: The power storage module according to Configuration 7 or 8, wherein the current collector plate includes: a base portion; and a plurality of lead portions that extend from the base portion and are connected to the terminals, and the base portion is connected to the upper wall portion.

Configuration 10: The power storage module according to any one of Configurations 1 to 9, further including a plurality of the current collector plates that are on the first surface and are connected to the plurality of power storage devices, wherein the current collector plate connected to the busbar is one of the plurality of the current collector plates, among the plurality of the current collector plates, the current collector plate connected to the busbar is connected in series to the other current collector plates via the plurality of power storage devices, and among the plurality of the current collector plates connected in series, the current collector plate connected to the busbar is positioned at one end in a series connection direction.

### [Second Embodiment (Overall Configuration)]

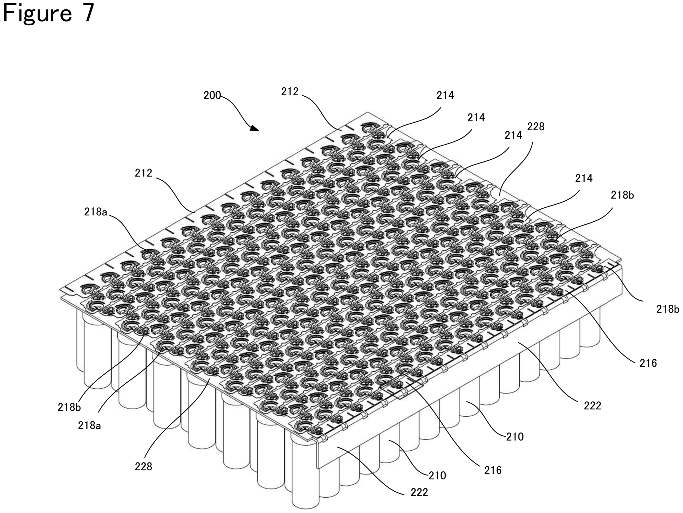

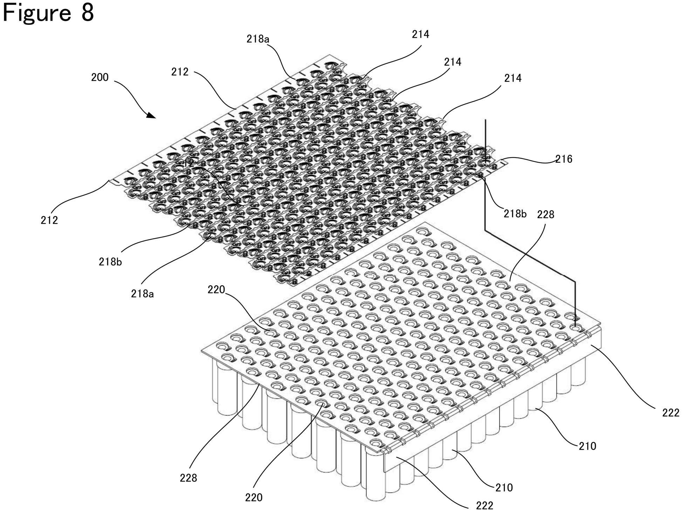

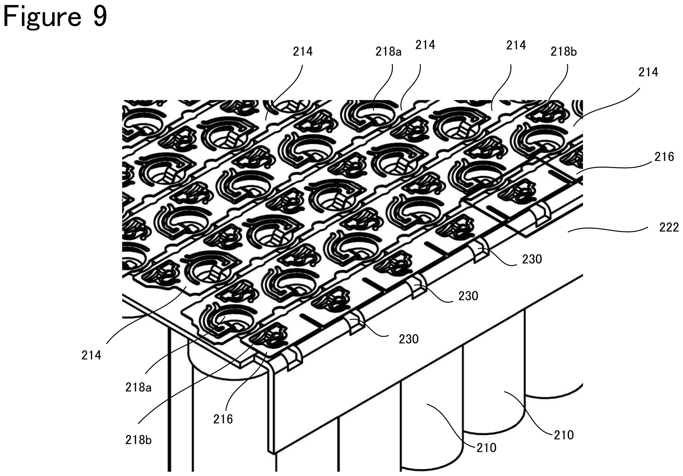

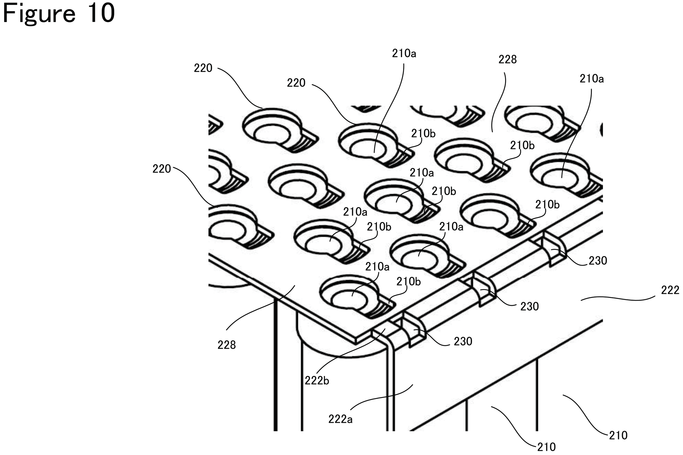

FIG. 7 is a perspective view of a battery module 200 as an example of a power storage module of a second embodiment in a state where current collector plates are visible. FIG. 8 is an exploded perspective view showing the current collector plates in FIG. 7 in a separated manner. FIG. 9 is an enlarged view of part of FIG. 7. FIG. 10 is an enlarged view of part of FIG. 8.

The battery module 200 includes a plurality of batteries 210 as examples of power storage devices. In this example, there are 14 arrays which each include 15 aligned batteries, and total 15×14 = 210 batteries 210 constitute one battery module 200.

As shown in FIG. 7, the positive electrode terminals of 15 batteries 210 on the first array are connected in parallel to the positive electrode current collector plate 212. Thirteen intermediate current collector plates 214 connect, in parallel, the negative electrode terminals of 15 batteries 210 on one array, and the positive electrode terminals of 15 batteries 210 on one next array to each other. The negative electrode terminals of 15 batteries 210 on the 14-th array are connected to a negative electrode current collector plate 216. By this connection, the positive electrode current collector plate 212, the intermediate current collector plates 214, and the negative electrode current collector plate 216 are connected to each other in series via the batteries 210. The positive electrode current collector plate 212 and the negative electrode current collector plate 216 are disposed on the opposite ends in the series connection direction.

Consequently, the batteries 210 on the first array to 14-th array are connected in series between the positive electrode current collector plate 212 and the negative electrode current collector plate 216 (hereinafter, also described as "plurality of current collector plates" about an issue that does not indicate which current collector plate, in a limited manner). The 15 batteries 210 on each array are connected in parallel.

As shown in FIGS. 7 and 9, each of the positive electrode current collector plate 212, the intermediate current collector plates 214, and the negative electrode current collector plate 216 is a plate-shaped conductive member disposed so as to cover the corresponding array of batteries 210. The plurality of current collector plates each include a base portion, and a plurality of lead portions that extend from the base portion. The lead portions are each connected to the positive electrode terminal or the negative electrode terminal through a corresponding opening 220. The base portion connects, in parallel, lead portions connected to the terminals with the same polarity, and connects, in series, lead portions connected to terminals with different polarities. The base portion of the positive electrode current collector plate 212, or the negative electrode current collector plate 216 may be provided with slit-shaped cutouts that extend in a direction intersecting with the direction in which the lead portions are arranged. In this example, the battery 210 includes a positive electrode terminal 210a and a negative electrode terminal 210b at the upper end portion (see FIG. 10). The base portion of the positive electrode current collector plate 212 has openings 218a that correspond to 15 batteries 210, and is connected to the positive electrodes of the batteries 210 through the respective openings 218a. The base portion of each intermediate current collector plate 214 has holes (openings 218b and 218a) that correspond to the negative electrode terminal of the batteries 210 on one array, and the positive electrode terminals on the next array. The negative electrode terminals of the batteries 210 on the one array, and the negative electrode terminals of the next array are connected to each other through the corresponding openings 218b and 218a. The base portion of the negative electrode current collector plate 216 has openings 218b that correspond to the negative electrode terminals of the batteries 210 on the 14-th array, and is connected to the negative electrode terminals of the battery 210 on the 14-th array through the corresponding openings 218b.

The battery 210 may include, for example: an electrode assembly that includes a positive electrode and a negative electrode facing each other via a separator; a can that houses the electrode assembly along with electrolytic solution; and a sealing plate that blocks an opening of the can along with a gasket.

The sealing plate and the can are made of a conductive material, and is made of, for example, metal.

The can includes: a cylindrical portion; a bottom portion that blocks one end of the cylindrical portion; and an opening portion formed at the other end of the cylindrical portion. A ring-shaped groove portion where its outer-peripheral surface is concave, and its corresponding inner-peripheral surface protrudes is formed in an area between the sealing plate of the cylindrical portion and the electrode assembly. Furthermore, a swaged portion bent to be inclined inward may be formed at an end of the opening portion in the radial direction of the cylindrical portion. The positive electrode of the electrode assembly may be electrically connected to the sealing plate via a current collector member, such as a lead. The sealing plate may be used as the positive electrode terminal.

The negative electrode of the electrode assembly may be electrically connected to the bottom portion of the can. The swaged portion of the can may be used as the negative electrode terminal.

The gasket is a ring-shaped member made of an insulative elastic body. The gasket intervenes between the sealing plate and the opening portion of the can. The gasket is formed to extend from an area between the upper surface of the sealing plate and the swaged portion to an area between the lower surface of the sealing plate and the groove portion. At least one of the sealing plate or the can may be provided with an exhaust valve that is blown in case the pressure in the can exceeds a predetermined value.

As an example of the power storage device, a battery is used and description is made in the present embodiment. However, the power storage device is not limited to the battery. The power storage device may be a capacitor.

As shown in FIG. 8, a holder 228 made of insulative resin is provided below the positive electrode current collector plate 212, the intermediate current collector plates 214, and the negative electrode current collector plate 216, and above batteries 210. That is, the positive electrode current collector plate 212, the intermediate current collector plates 214, and the negative electrode current collector plate 216 are fixed onto the upper surface (first surface) of the holder 228. The holder 228 has openings 220 that each correspond to the battery 210, and each allow two terminals (a positive electrode terminal and a negative electrode terminal) thereof to be exposed.

A negative electrode busbar 222 that extends on a side of one array of batteries 210 in the longitudinal direction is connected to the negative electrode current collector plate 216. The negative electrode busbar 222 is connected, at its one end, to a total negative electrode (not shown). A positive electrode busbar (not shown) that is connected to the positive electrode current collector plate 212 is provided on a side of one array of batteries 10 on the opposite side of the negative electrode busbar 222, with a configuration similar to that of the negative electrode busbar 222. The positive electrode busbar is connected, at its one end, to a total positive electrode (not shown).

As shown in FIG. 10, the upper end of the battery 210 is provided with the positive electrode terminal 210a at the center portion (sealing plate), and the negative electrode terminal 210b at the peripheral portion (swaged portion). From the opening 220 of the holder 228, the positive electrode terminal 210a and part of the negative electrode terminal 210b are visible.

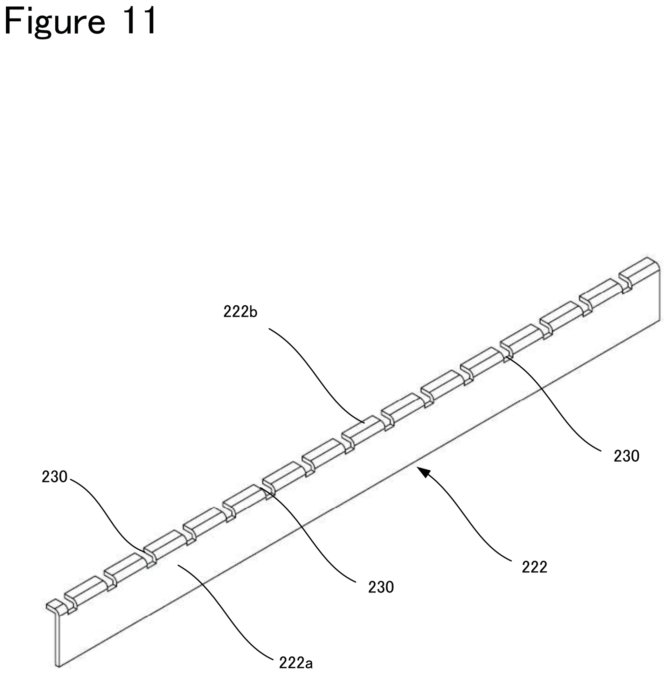

FIG. 11 is a perspective view showing the configuration of the negative electrode busbar 222. As illustrated, the negative electrode busbar 222 includes: a side wall portion 222a positioned on a side portion of one array of batteries 10 on one side; and upper wall portions 222b that are bent inward above the one array of batteries 210 from the upper end of the side wall portion 222a. In other words, the negative electrode busbar 222 includes: the upper wall portion 222b that extends along the upper surface (first surface) of the holder 228; and the side wall portion 222a that is connected to the upper surface, extends in a direction intersecting with the upper surface, and faces the side surface (second surface) of the holder 228. Cutout portions 230 formed by removing parts of the upper wall portion are provided. In this case, total 15 cutout portions 230 are formed for the respective batteries 210, one by one. The positive electrode busbar can be configured similarly to the negative electrode busbar 222. The negative electrode current collector plate 216 is joined to the upper wall portion 222b by laser welding or resistance welding. Note that the cutout portion 230 may be formed only in the upper wall portion 222b. The negative electrode busbar 222 may be fixed by, for example, screwing between through-holes (not shown) provided in the side wall portion 222a and the side surface of the holder 228.

### [Configuration of Lead Portion of Current Collector Plate]

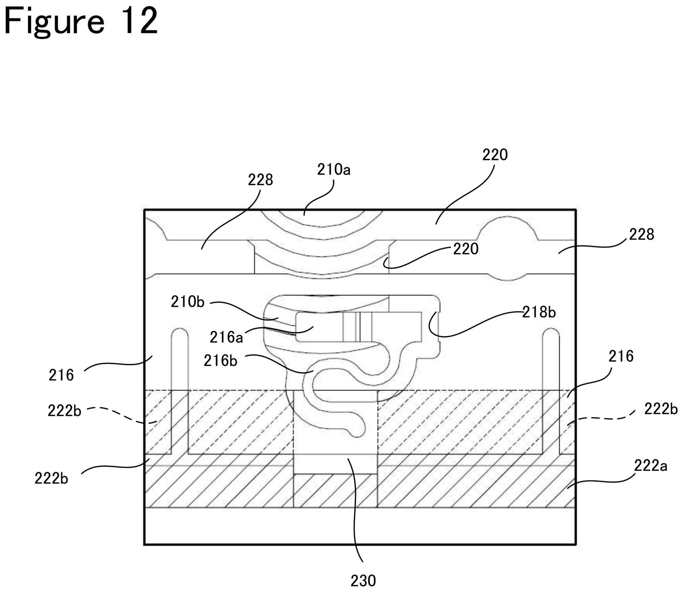

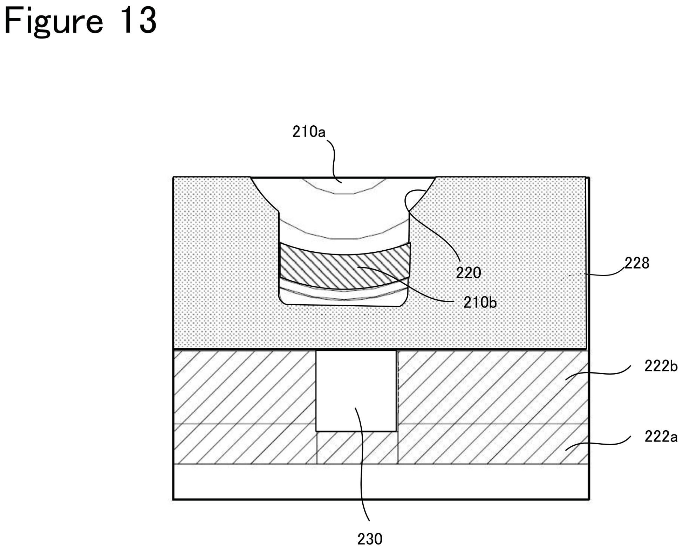

FIG. 12 is a plan view of a portion of the opening 218b of the negative electrode current collector plate 216 in FIGS. 7 to 10. FIG. 13 is a plan view showing this portion in a state where the intermediate current collector plates 214 and the negative electrode current collector plate 216 are removed. Note that the configuration of the opening 218b is similarly applied to the intermediate current collector plates 214.

As illustrated, the lead portion 216a of the negative electrode current collector plate 216 extends from part of the inner circumferential edge of the opening 218b, and reaches the fuse portion 216b that has a narrow S-shape and is formed as a bypass path, and a distal end portion having a rectangular shape in plan view is connected to the negative electrode terminal 210b of the battery 210. The fuse portion 216b is blown by overcurrent.

The portion hatched with diagonal lines in FIGS. 12 and 13 is a portion where the negative electrode busbar 222 is positioned, and the side wall portion 222a extends along the side wall of the holder 228. The upper wall portion 222b formed by bending the upper portion of the side wall portion 222a extends along the upper surface of the holder 228. Note that in FIG. 11, a portion of the negative electrode busbar 222 positioned below the negative electrode current collector plate 216 is indicated by broken diagonal lines.

The cutout portions 230 are formed in the negative electrode busbar 222 by removing parts of the upper wall portion 222b and the side wall portion 222a. In FIG. 13, the holder 228 is indicated with a sand texture, and the negative electrode terminal 210b is indicated by hatching with diagonal lines. As illustrated, the holder 228 does not reside in the cutout portions 230, and the accommodation space of the battery 210 is exposed. Note that parts of the holder 228 may extend to the cutout portions 230.

As shown in FIG. 12, part of the fuse portion 216b of the lead portion 216a is positioned above the cutout portion 230. Consequently, even in a case where the fuse portion 216b is disposed at a position close to the outer end of the busbar 222, it is not conductive with the busbar 222 as long as it is on the cutout portion 230. Consequently, the current flowing through the battery 210 is allowed to flow to the fuse portion 216b. Presence of the fuse portion 216b above the cutout portion 230 can reduce the thermal radiation property of the fuse portion 216b and improves the blowing property of the fuse portion 216b, in comparison with a module where the holder 228 or the busbar 222 is in contact with the fuse portion 216b.

According to such a configuration, the holder 228 is not required to cover the entire lower side of the fuse portion 216b, and can be relatively reduced in size. Accordingly, the energy density of the battery module can be maintained high. Note that the cutout portion 230 is the cutout that extends from the edge of the negative electrode busbar. However, the cutout portion in the present disclosure is not limited only to the cutout. The cutout portion may be a through-hole.

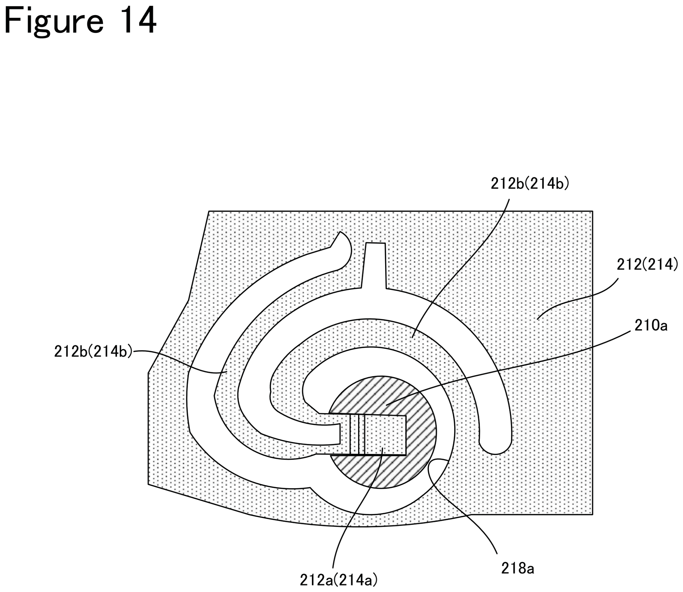

FIG. 14 shows the configuration of the opening 218a which is provided for the positive electrode current collector plate 212 and the intermediate current collector plates 214 and from which the positive electrode terminal 210a is exposed. As illustrated, the opening 218a is provided for the positive electrode current collector plate (intermediate current collector plates) 212 (214) above the positive electrode terminal of the battery 210. The lead portion 212a (214b) that extends from two spots around the opening 218a reaches inward in a double helix manner, and is connected to the distal end portion. Note that in FIG. 14, the portion of the positive electrode current collector plate (intermediate current collector plate) 212 (214) is indicated with a sand texture, and the positive electrode terminal 210a of the battery 210 is indicated by hatching with diagonal lines.

### [Other]

Note that in the above description, the positive electrode terminal 210a of the battery 210 is provided at the center (sealing plate) on the upper end, and the negative electrode terminal 210b is provided at a peripheral portion (swaged portion). However, the positions may be inverted. In plan view, the positive electrode terminal 210a has a circular shape, and the negative electrode terminal 210b has a circular ring shape. However, another shape may be adopted. Furthermore, the positive electrode terminal 210a and the negative electrode terminal 210b may be provided at the upper end and the lower end of the battery 210, respectively.

The configuration of the connection portion between the negative electrode current collector plate 216 and the negative electrode busbar 222 is thus described. The described configuration may be a configuration of the positive electrode current collector plate 212 and the positive electrode busbar.

### REFERENCE SIGNS LIST

10 Battery, 10a Positive electrode, 10b Negative electrode, 12 Positive electrode current collector plate, 14 Intermediate current collector plate, 16 Negative electrode current collector plate, 16b fuse, 18 Cutout, 20 Opening, 22 Negative electrode basbar, 26 Positive electrode busbar, 28 Holder, 28a Elongated portion, 30 Cutout portion, 34 Positioning pin, 100 Battery module, 210 Battery, 210a Positive electrode terminal, 210b Negative electrode terminal, 212 Positive electrode current collector plate, 214 Intermediate current collector plate, 216 Negative electrode current collector plate, 216b Fuse portion, 218 Opening, 220 Opening, 222 Negative electrode busbar, 228 Holder, 230 Cutout portion, 200 Battery module

## Claims

1. A power storage module, including:
a plurality of power storage devices;
a holder that covers one end side of the plurality of power storage devices, and has openings which are formed in a first surface of the holder and through which terminals of the respective power storage devices are exposed;
a current collector plate that is disposed on the first surface side of the holder, and has one end connected to the terminals via the openings; and
a busbar connected to another end of the current collector plate, wherein
the busbar has a cutout portion in an area facing the holder, the cutout portion comprising a cutout formed by removing part of the busbar, or a through-hole.

2. The power storage module according to claim 1, wherein
the holder includes an elongated portion that extends into the cutout portion, and part of the current collector plate faces a surface of the elongated portion.

3. The power storage module according to claim 2, wherein
the holder includes a second surface that is connected to the first surface, and extends in a direction intersecting with the first surface,
the cutout portion of the busbar faces the second surface, and
the elongated portion extends from the second surface.

4. The power storage module according to claim 2 or 3, wherein
a positioning structure used to position the elongated portion and the current collector plate is formed on the elongated portion and the current collector plate.

5. The power storage module according to claim 4, wherein
the positioning structure includes positioning holes that are provided at the elongated portion and part of the current collector plate, and overlap each other.

6. The power storage module according to claim 4 or 5, wherein
the positioning structure further includes a positioning pin that is inserted into the positioning holes overlapping each other.

7. The power storage module according to claim 6, wherein
the positioning structure consists of the positioning pin and a hole provided respectively for one and another of the elongated portion and the current collector plate.

8. The power storage module according to claim 3, wherein
the busbar includes: a side wall portion positioned along the second surface; and an upper wall portion that is bent from the side wall portion, and extends along the first surface, and
the cutout portion is formed by removing part of the upper wall portion.

9. The power storage module according to claim 8, wherein
the cutout portion is further formed to extend from the upper wall portion to the side wall portion.

10. The power storage module according to claim 8 or 9, wherein
the current collector plate includes: a base portion; and a plurality of lead portions that extend from the base portion and are connected to the terminals, and
the base portion is connected to the upper wall portion.

11. The power storage module according to any one of claims 1 to 10, further including
a plurality of the current collector plates that are on the first surface and are connected to the plurality of power storage devices, wherein
the current collector plate connected to the busbar is one of the plurality of the current collector plates,
among the plurality of the current collector plates, the current collector plate connected to the busbar is connected in series to the other current collector plates via the plurality of power storage devices, and
among the plurality of the current collector plates connected in series, the current collector plate connected to the busbar is positioned at one end in a series connection direction.

12. The power storage module according to claim 1, wherein
the current collector plate includes: a base portion; and a plurality of lead portions that are provided at the base portion, and are connected to the terminals through the openings,
the lead portion includes a fuse portion that is blown by overcurrent, and
at least part of the fuse portion overlaps the cutout portion.

13. The power storage module according to claim 12, wherein
the busbar includes: a side wall portion that faces a second surface connected to the first surface; and an upper wall portion that is bent from the side wall portion, and extends along the first surface, and
the cutout portion is formed by removing part of the upper wall portion.

14. The power storage module according to claim 12 or 13, wherein
the base portion includes a hole provided in the current collector plate, and at the lead portion, the fuse portion curved in an S-shape extends from an inner circumferential edge of the hole, and a distal end of the fuse portion is connected to the terminal.

15. The power storage module according to any one of claims 12 to 14, wherein
part of the fuse portion is positioned above the cutout portion, and another part of the lead portion is positioned above the holder.
